# EUROPÄISCHE PATENTSCHRIFT

(11) **EP 3 608 571 B1**
(45) Veröffentlichungstag und Bekanntmachung des Hinweises auf die Patenterteilung: **29.09.2021**
(21) Anmeldenummer: 18187516.2
(22) Anmeldetag: 06.08.2018
(51) Int. Cl.: F16L 5/02, F16L 5/04, F16L 5/12, E04F 17/08

(54) **VERBINDUNGSANORDNUNG**
CONNECTION ASSEMBLY
SYSTÈME DE RACCORDEMENT

(43) Veröffentlichungstag der Anmeldung: 12.02.2020
(73) Patentinhaber: Geberit International AG, 8645 Jona (CH)
(72) Erfinder: DEJAKUM, Roger, 9630 Wattwil (CH)
(74) Vertreter: Frischknecht, Harry Ralph

(56) Entgegenhaltungen:
- EP-A1- 0 635 665
- EP-A1- 3 236 128
- WO-A1-92/11484
- DE-A1- 19 515 860
- DE-B3-102013 108 957
- DE-U1-202015 104 363
- US-A1- 2013 025 107

## Beschreibung

### TECHNISCHES GEBIET

Die vorliegende Erfindung betrifft eine Verbindungsanordnung zur Verbindung eines Rohrs mit einem Gebäude im Bereich einer Gebäudeöffnung nach dem Oberbegriff von Anspruch 1.

### STAND DER TECHNIK

Aus dem Stand der Technik sind Halteelemente für Rohre, welche sich durch Öffnungen in Wänden oder Böden hindurch erstrecken, bekannt.

Zum Beispiel zeigt die US 2013/025107 A1 ein derartiges Element.

Die EP 1 512 434 zeigt ein weiteres Element. Nach der technischen Lehre der EP 1 512 434 wird ein Rohr durch eine Öffnung in einem Boden geführt und ist im Bereich der Öffnung mit einem Mantel aus einem Intumeszenzmaterial umgeben. Im Brandfall quillt dieses Material auf und verschliesst den Zwischenraum zwischen Rohr und Öffnung.

Das Rohr wird in einer Ausführungsform über einen Lagerring in der Öffnung gehalten, wobei der Lagerring zwischen einem Flansch des Rohrs und einem Absatz der Öffnung gehalten ist. In einer anderen Ausführungsform ist in der Öffnung eine Hülse eingesetzt, welche ebenfalls einen Absatz für die Kontaktierung des Lagerrings aufweist.

Diese Art von Lagerung weist einige Nachteile auf. Der Lagerring muss, um die Position des Rohrs zu halten, eine gewisse Härte aufweisen, was dazu führt, dass akustischen Schwingungen über den Lagerring auf den Boden übertragen werden. Die Gewichtskraft führt bei diesen Ausführungsformen zu einem wirksamen Drehmoment, weil die Gewichtskraft zu einer Drehbewegung um den Haltepunkt führen kann. Die Halterung muss daher aus statischen Gründen über ein Mindestmass an integraler Festigkeit verfügen, was zwangsläufig zu einer Schallkopplung zwischen Bauteil und Baukörper fuhrt.

Zudem ist die mechanische Lagerung innerhalb der Öffnung relativ aufwändig, weil einerseits eine Stufenbohrung im Beton hergestellt werden muss, oder andererseits eine Hülse in Öffnung eingesetzt werden muss.

Andere aus dem Stand der Technik bekannte Ausführungsformen verwenden stets Rohrschellen zur Befestigung des Rohres. Somit werden Körperschallbrücken gebildet, was sich negativ auf den Schallpegel auswirkt.

Aus der EP 2 466 178 und der EP 1 577 449 sind weitere Lagerungsarten bekannt geworden.

Die oben genannten Halteelemente weisen weiter den Nachteil auf, dass deren Einstellbarkeit stark limitiert ist.

### DARSTELLUNG DER ERFINDUNG

Ausgehend von diesem Stand der Technik liegt der Erfindung eine Aufgabe zugrunde, eine Verbindungsanordnung zur Verbindung eines Rohrs mit einem Gebäude im Bereich einer Gebäudeöffnung anzugeben, welche die Nachteile des Standes der Technik überwindet. Insbesondere ist es eine bevorzugte Aufgabe, eine Verbindungsanordnung anzugeben, welche bezüglich verschiedener Einbausituation flexibler einsetzbar ist.

Diese Aufgabe wird durch den Gegenstand von Anspruch 1 gelöst. Demgemäss umfasst eine Verbindungsanordnung zur Verbindung eines Rohrs mit einem Gebäude im Bereich einer Gebäudeöffnung ein durch die Gebäudeöffnung hindurchzuführendes Rohr mit einem aussenseitig angeordneten Lagerbereich und ein Anschlusselement, welches mit dem Lagerbereich des Rohrs verbindbar ist und welches eine Flanschfläche aufweist, mit welcher das Anschlusselement auf einer gebäudeseitigen Auflagefläche lagerbar ist. Der Lagerbereich des Rohrs weist mindestens zwei in Richtung der Rohrachse beabstandet zueinander angeordnete Lagerstellen auf. Weiter weist das Anschlusselement eine Lagerstelle auf, wobei die besagte Lagerstelle von einer Kontaktlage vom Rohr weg in eine Einstelllage und von der Einstelllage in die Kontaktlage auf das Rohr hin bewegbar ausgebildet ist. In der Kontaktlage ist die anschlusselementseitige Lagerstelle mit einer der mindestens zwei rohrseitigen Lagerstellen in einen tragfähigen Kontakt bringbar. In der Einstelllage ist die anschlussseitige Lagerstelle nicht im Kontakt mit den mindestens zwei rohrseitigen Lagerstellen, so dass das Rohr in Richtung der Rohrachse bezüglich des Anschlusselementes verschiebbar ist.

Durch die Einstellbarkeit der Lage zwischen Rohr und Anschlusselement ergeht der Vorteil, dass die Lage des Rohrendes bezüglich der Flanschfläche und somit auch bezüglich der gebäudeseitigen Einbaukonfiguration einstellbar ist. In Einbaulage liegt das Anschlusselement durch den Kontakt zwischen der Flanschfläche und der gebäudeseitigen Auflagefläche ortsfest in der Gebäudeöffnung. Durch die Verschiebbarkeit des Rohrs relativ zum Anschlusselement wird erreicht, dass das Rohrende relativ zur gebäudeseitigen Auflagefläche verschoben werden kann. Das heisst, der Abstand zwischen dem oberen Rohrende und der gebäudeseitigen Auflagefläche wird einstellbar und kann an die gewünschte Einbausituation angepasst werden.

Unter der Ausdrucksweise eines "tragfähigen Kontaktes" wird verstanden, dass der tragfähige Kontakt derart ist, dass mindestens eine des Eigengewichts des Rohrs entsprechende Gewichtskraft über die Lagerstelle in das Anschlusselement einleitbar ist.

Vorzugsweise sind die mindestens zwei rohrseitigen Lagerstellen als Nuten ausgebildet. Vorzugsweise sind pro Lagerstelle mehrere Nuten, die sich nur über einen Teilbereich des Rohrumfangs erstrecken, angeordnet. Alternativerweise ist pro Lagerstelle eine vollständig um den Rohrumfang umlaufende Nute angeordnet.

Die Nuten von zwei benachbart liegenden rohrseitigen Lagerstellen liegen in Richtung der Rohrachse in einem Abstand zueinander.

Die Nuten sind vorzugsweise integral am Rohr angeformt und liegen insbesondere in einem Endbereich des Rohrs. Der Endbereich kann bezüglich den restlichen Teilen des Rohrs einen vergrösserten Durchmesser aufweisen.

Die anschlusselementseitige Lagerstelle ist Teil eines Lagerstellenrings, der an einem zum Anschlusselement gehörenden Trägerring um den Umfang des Trägerrings verschwenkbar angeordnet ist. Durch die Verschwenkung ist die anschlussseitige Lagerstelle zwischen der Kontaktlage und der Einstelllage hin und her bewegbar.

Der Trägerring ist Teil des Anschlusselementes und ist in diesem gelagert. Besonders bevorzugt ist der Trägerring wie unten beschrieben gelagert. Andere Arten der Lagerung sind auch denkbar.

Der Lagerstellenring ist vorzugsweise auf der Aussenseite des Trägerrings gelagert. Die Lagerung ist vorzugsweise derart, dass der Lagerstellenring relativ zum Trägerring verschwenkbar ist und dass die oben beschriebene Kraft vom Lagerstellenring in den Trägerring einleitbar ist.

Der Lagerstellenring ist vorzugsweise aus mindestens zwei Ringsegmenten zusammengesetzt, welche über eine Rastverbindung miteinander in Verbindung stehen.

Vorzugsweise wird die anschlusselementseitige Lagerstelle durch mehrere vom Lagerstellenring abstehende Lagerlaschen bereitgestellt, welche durch einen Durchbruch im Trägerring zu den rohrseitigen Lagerstellen hindurchragen. Die Lagerlaschen sind vorzugsweise gefedert ausgebildet. Die Lagerlaschen und/oder der Randbereich des Durchbruches weist eine winklig geneigte Fläche auf, welche derart winklig geneigt ist, dass bei einer Bewegung des Lagerstellenrings relativ zum Trägerring die Lagerlaschen von der Kontaktlage in die Einstelllage in den Durchbruch hinein bewegt werden. Die Lagerlaschen werden somit vom Rohr weg bewegt.

Vorzugsweise umfasst die Verbindungsanordnung weiterhin einen Betätigungshebel, welcher an einer Schwenkachse am Anschlusselement gelagert ist, wobei der Betätigungshebel mit einem Aktuatorabschnitt an eine winklig geneigte Fläche am Lagerstellenring eingreift und mit einem Betätigungsabschnitt um die Schwenkachse verschwenkbar ist, wobei bei einer Verschwenkung des Betätigungshebels der Aktuatorabschnitt derart zur winklig geneigten Fläche bewegt wird, dass der Lagerstellenring relativ zum Trägerring um die Rohrachse von der Kontaktlage in die Einstelllage bewegt wird.

Die Ausdrucksweise, dass der Betätigungshebel am Anschlusselement gelagert ist, ist so zu verstehen, dass der Betätigungshebel an einem Element oder Teil des Anschlusselementes gelagert ist. Dieses Element oder Teil steht, abgesehen von der Verschwenkbarkeit um die Verschwenkachse fest zum Trägerring bzw. zum Anschlusselement. Das heisst, dass der Lagerstellenring relativ zum Betätigungshebel bewegbar ausgebildet ist.

Vorzugsweise rastet der Betätigungshebel in mindestens einer seiner Endlagen an einem Rastelement ein. Hierdurch wird seine Position gesichert. Vorzugsweise rastet der Betätigungshebel in beiden Endlagen ein.

Vorzugsweise umfasst das Anschlusselement ein Gehäuse. Die Flanschfläche ist dabei Teil des Gehäuses. Die anschlusselementseitige Lagerstelle ist über mindestens ein Schallentkoppelungselement im Gehäuse gelagert.

Das mindestens eine Schallentkoppelungselement ist demnach zwischen dem Anschlusselement, das mit dem Rohr in Verbindung steht, und dem Gehäuse angeordnet. Die Schallübertragung vom Rohr auf die Flanschfläche und somit auf das Gebäude wird demnach durch das mindestens eine Schallentkoppelungselement unterbunden.

Vorzugsweise steht das Anschlusselement ausschliesslich über das mindestens eine Schallentkoppelungselement mit dem Gehäuse in Verbindung.

Unter der Ausdrucksweise Schallentkoppelungselement wird ein Element verstanden, welches vorzugsweise aus einem weichen Material ist und elastische Eigenschaften aufweist. Besonders bevorzugt ist das Schallentkoppelungselement ein Dämpfer aus Gummi oder Kunststoff.

Vorzugsweise ist das mindestens eine Schallentkoppelungselement an Aufnahmen am Trägerring gelagert. Die Schallentkoppelungselemente umgeben den Trägerring umfangsseitig mindestens teilweise oder vollständig. Vorzugsweise besteht jedes der Schallentkoppelungselemente vorzugsweise aus mindestens zwei Teilen, wobei sich jeder Teil im Wesentlichen um einen gleichen Teil der Umfangsseite des Trägerrings erstreckt. Bei einem zweiteiligen Schallentkoppelungselement wird die Montage desselben vereinfacht.

Vorzugsweise ist das Schallentkoppelungselement aus genau zwei Teilen ausgebildet, wobei sich jeder der Teile im Wesentlichen hälftig um den Umfang des Trägerrings erstreckt.

Vorzugsweise sind mehrere Schallentkoppelungselemente in Richtung der Rohrachse beabstandet am Trägerring zueinander angeordnet, wobei eines der Schallentkoppelungselemente an einer von Trägerring abstehenden Fläche und an einer von Gehäuse abstehenden Fläche aufliegen und wobei ein anderes der Schallentkoppelungselemente an einer von Trägerring abstehenden Fläche und an einer von Gehäuse abstehenden Fläche, insbesondere über einen Haltering, aufliegen.

Vorzugsweise umfasst das Gehäuse mindestens zwei Gehäuseschalen, welche Gehäuseschalen mit Rastelementen miteinander verbindbar sind. Die Ausbildung des Gehäuses mit zwei oder mehr Gehäuseschalen hat den Vorteil, dass die im Gehäuse liegenden Element in einer der Gehäuseschalen aufbaubar sind und dass anschliessend die andere(n) der Gehäuseschalen montiert werden können.

Vorzugsweise ist der Betätigungshebel am Gehäuse gelagert und ist zum Gehäuse verschwenkbar.

Der Betätigungshebel ist vorzugsweise derart am Gehäuse angeordnet, dass sich der Betätigungshebel nur dann im Eingriff mit dem Lagerstellenring befindet, wenn der Betätigungshebel entsprechend betätigt bzw. verschwenkt wird. Das heisst, wenn die Lagerstellen in der Kontaktlage liegen, also im Eingriff miteinander sind, ist der Betätigungshebel nicht in Kontakt mit dem Lagerstellenring. Hierdurch kann eine Schallentkoppelung erreicht werden.

Vorzugsweise umfasst die Verbindungsanordnung gegenüber der Flanschfläche ein Brandschutzelement, wobei das Brandschutzelement ein um das Rohr umlaufender Intumeszenzmantel, der in einem Metallkäfig gelagert, umfasst. Der Metallkäfig wird über Metallbügel, die sich durch die Verbindungsanordnung hindurch bis zur Flanschfläche erstrecken und mit einem Anschlagsabschnitt auf der Flanschfläche aufliegen, gehalten.

Vorzugsweise erstrecken sich die Anschlagsabschnitte quer zur Rohrachse gesehen im Wesentlichen vollständig über die Flanschfläche. Das heisst, dass die Anschlagsabschnitte der Metallbügel immer derart liegen, dass der Anschlagsabschnitt in Kontakt mit der Gebäudefläche kommt, welche sich der Gebäudeöffnung anschliesst.

Vorzugsweise sind mindestens zwei Metallbügel bezüglich der Rohrachse gegenüber einander angeordnet.

Das Brandschutzelement schliesst sich vorzugweise dem Gehäuse an. Vorzugsweise steht das Brandschutzelement vorzugsweise über eine Art Bajonettverschluss mit den Metallbügeln in Verbindung.

Vorzugsweise ist im Bereich des oberen Rohrendes ein den Rohrquerschnitt und den offenen Querschnitt des Anschlusselementes verschliessenden Bauschutz vorgesehen. Alternativerweise oder zusätzlich ist im Rohrbereich ein Bauschutz vorgesehen, der sich entlang des Rohrs erstreckt.

Ein System umfasst eine Verbindungsanordnung nach obiger Beschreibung und ein Halteelement. Das Halteelement umfasst einen Befestigungsbügel zur Befestigung des Halteelementes an einer Wand und ein Lagerteil zur Lagerung des Anschlusselements, wobei der Befestigungsbügel und das Lagerteil über eine Längsführung miteinander in Verbindung stehen. Die gebäudeseitige Auflagefläche wird hier durch das Halteelement bereitgestellt.

Vorzugsweise umgibt das Lagerteil das Anschlusselement im Wesentlichen vollständig und steht mit der Flanschfläche in Kontakt.

Vorzugsweise weist die Längsführung Rastmittel auf, so dass die Lage zwischen Lagerteil und Befestigungsbügel arretiert werden kann.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Explosionsdarstellung von Teilen einer Verbindungsanordnung zur Verbindung eines Rohrs mit einem Gebäude im Bereich einer Gebäudeöffnung;
- Fig. 2: eine Detailansicht der Verbindungsanordnung nach Figur 1;
- Fig. 3: eine Detailansicht der Verbindungsanordnung nach den vorhergehenden Figuren;
- Fig. 4: eine Detailansicht der Verbindungsanordnung nach den vorhergehenden Figuren;
- Fig. 5: eine perspektivische Ansicht von Teilen der Verbindungsanordnung nach den vorhergehenden Figuren;
- Fig. 6: eine Schnittdarstellung der Verbindungsanordnung nach den vorhergehenden Figuren;
- Fig. 7: eine Explosionsdarstellung der Verbindungsanordnung nach den vorhergehenden Figuren;
- Fig. 8: eine weitere Explosionsdarstellung der Verbindungsanordnung nach den vorhergehenden Figuren;
- Fig. 9: eine Darstellung eines Teilschnitts quer zur Rohrachse der Verbindungsanordnung nach der Figur 8;
- Fig. 10: eine weitere Explosionsdarstellung der Verbindungsanordnung nach den vorhergehenden Figuren;
- Fig. 11: eine Darstellung eines Teilschnitts quer zur Rohrachse der Verbindungsanordnung nach der Figur 10;
- Fig. 12: eine weitere Explosionsdarstellung der Verbindungsanordnung nach den vorhergehenden Figuren;
- Fig. 13: eine Darstellung eines Teilschnitts quer zur Rohrachse der Verbindungsanordnung nach der Figur 12;
- Fig. 14: eine weitere Explosionsdarstellung der Verbindungsanordnung nach den vorhergehenden Figuren;
- Fig. 15: eine weitere Darstellung der Verbindungsanordnung nach den vorhergehenden Figuren mit einem Brandschutzelement;
- Fig. 16: eine weitere Darstellung der Verbindungsanordnung nach der Figur 15;
- Fig. 17: eine weitere Darstellung der Verbindungsanordnung nach den vorhergehenden Figuren mit einem Bauschutzelement;
- Fig. 18: eine weitere Darstellung der Verbindungsanordnung nach den vorhergehenden Figuren im Zusammenhang mit einer ersten Einbausituation;
- Fig. 19: eine weitere Darstellung der Einbausituation nach Figur 18;
- Fig. 20: eine Schnittdarstellung der Einbausituation nach Figur 18;
- Fig. 21: eine weitere Darstellung der Einbausituation nach Figur 18;
- Fig. 22: eine weitere Darstellung der Verbindungsanordnung nach den vorhergehenden Figuren im Zusammenhang mit einer zweiten Einbausituation;
- Fig. 23: eine weitere Darstellung der Einbausituation nach Figur 22;
- Fig. 24: eine weitere Darstellung der Einbausituation nach Figur 22; und
- Fig. 25: eine weitere Darstellung der Einbausituation nach Figur 22.

### BESCHREIBUNG BEVORZUGTER AUSFÜHRUNGSFORMEN

In den Figuren wird eine Verbindungsanordnung 1 zur Verbindung eines Rohrs 2 mit einem Gebäude im Bereich einer Gebäudeöffnung 3 gezeigt. Die Verbindungsanordnung 1 liegt dabei typischerweise in der Gebäudeöffnung 3. Dabei sichert die Verbindungsanordnung 1 das Rohr 2 zu dem Gebäude.

Die Verbindungsanordnung 1 umfasst ein durch die Gebäudeöffnung 3 hindurchzuführendes Rohr 2 mit einem aussenseitig angeordneten Lagerbereich 4 und ein Anschlusselement 5, welches mit dem Lagerbereich 4 des Rohrs 2 verbindbar ist, und welches eine Flanschfläche 6 aufweist, mit welcher das Anschlusselement 5 auf einer Gebäudeseitigen Auflagefläche 7 lagerbar ist. Das Rohr 2 wird demnach über das Anschlusselement 5 mit dem Gebäude verbunden.

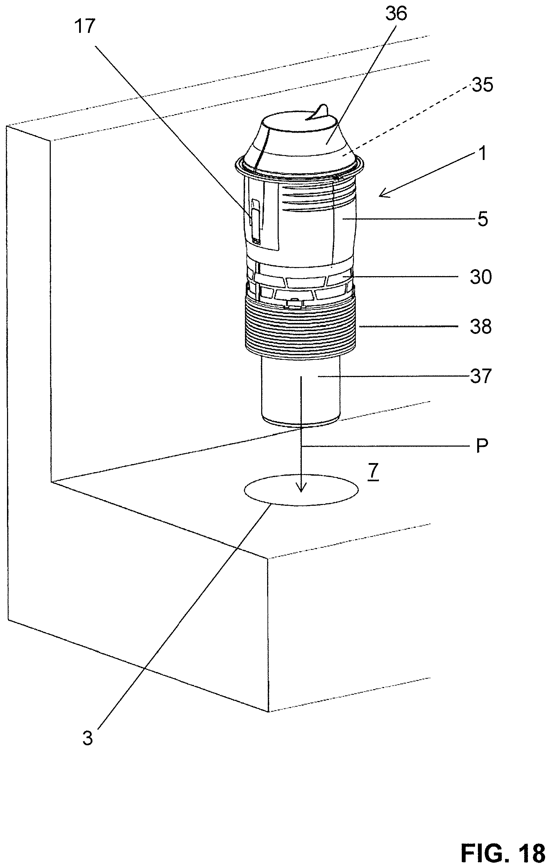

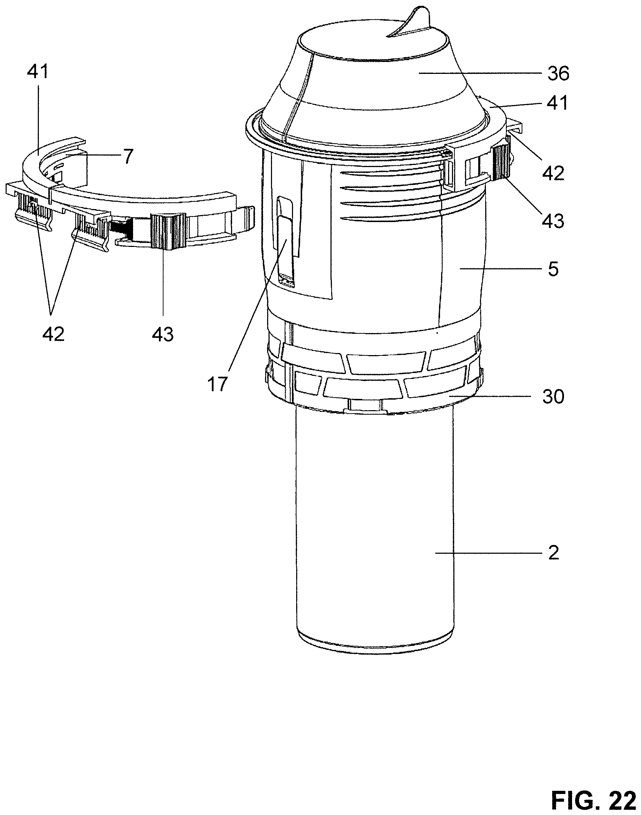

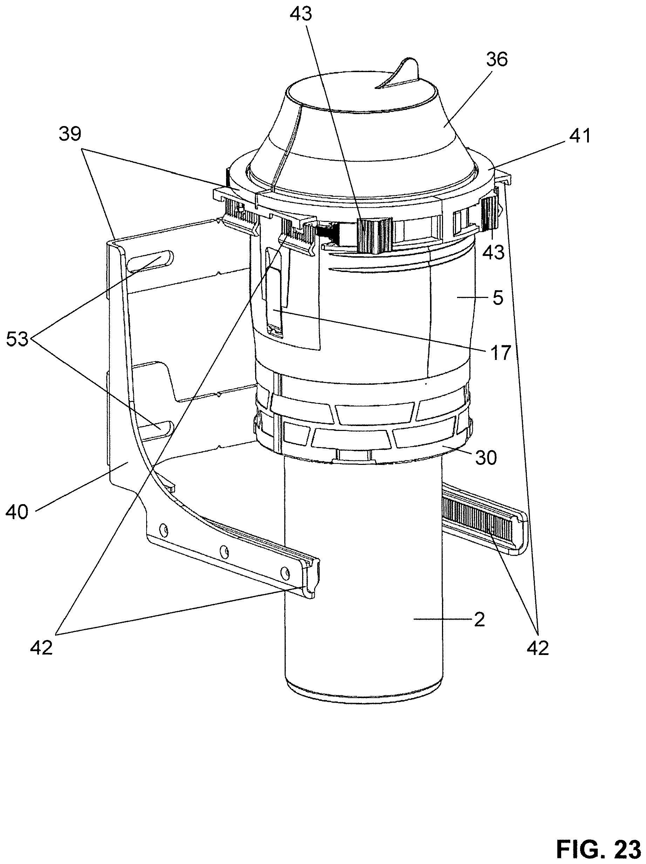

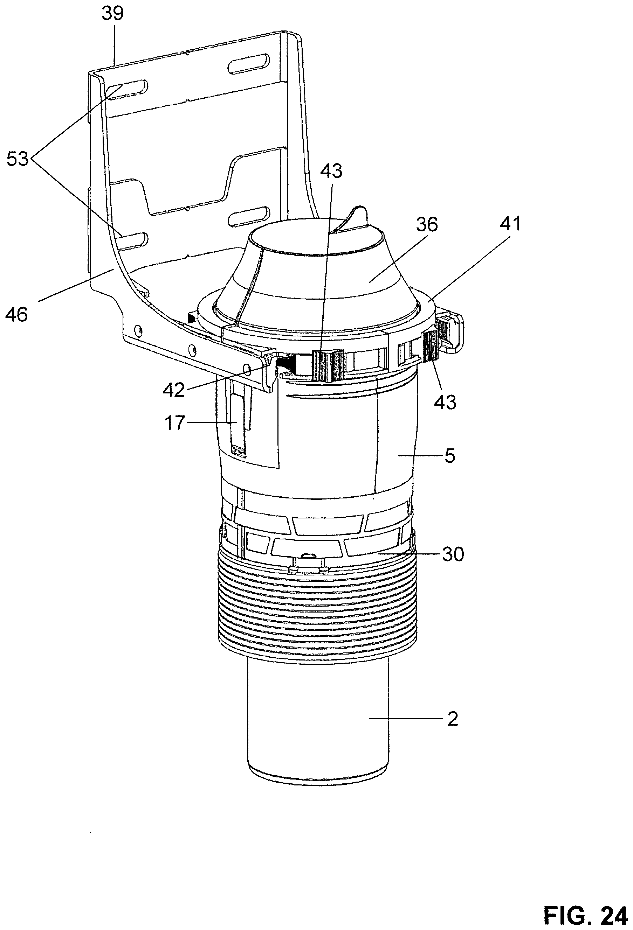

Die gebäudeseitige Auflagefläche 7 kann verschiedenartig ausgebildet sein. Gemäss einem ersten Beispiel, das in den Figuren 18 bis 21 gezeigt wird, kann die Auflagefläche 7 Teil des Gebäudes sein. Nach einem zweiten Beispiel, das in den Figuren 22 bis 25 gezeigt wird, ist die gebäudeseitige Auflagefläche 7 Teil eines Haltelementes 39.

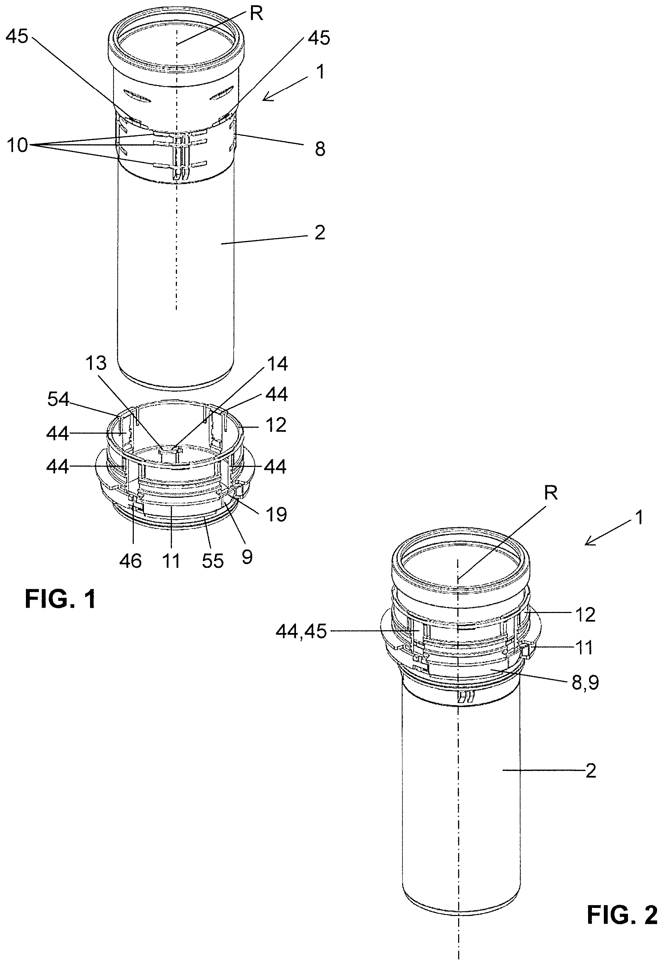

Anhand der Figuren 1 bis 13 wird nun der Aufbau der erfindungsgemässen Verbindungsanordnung 1 gemäss einer möglichen Ausführungsform genauer erläutert.

In der Figur 1 wird gezeigt, dass der Lagerbereich 4 des Rohrs 2 mindestens zwei in Richtung der Rohrachse R beabstandet zueinander angeordnete Lagerstellen 8 aufweist. In der gezeigten Ausführungsform sind drei Lagerstellen 8 angeordnet. Die Abstände zwischen den Lagerstellen 8 sind dabei unregelmässig. Die Abstände können aber auch regelmässig sein. Weiter ist es denkbar, noch zusätzliche Lagerstellen anzuordnen. Die Lagerstellen 8 haben in der gezeigten Ausführungsform die Form von Nuten 10. Die Nuten 10 erstrecken sich von aussen her in das Rohr 2. Pro Lagerstelle 8 sind umfangseitig mehrere Nuten 10 angeordnet. Dabei erstrecken sich die Nuten 10 nur über einen Teilbereich des Rohrumfangs des Rohrs 2. In der gezeigten Ausführungsform sind pro Lagerstelle 8 jeweils 4 Nuten 10 angeordnet.

Weiter weist auch das Anschlusselement 5 eine Lagerstelle 9 auf. Die Lagerstelle 9 des Anschlusselementes 5 ist in der gezeigten Ausführungsform Teil eines Lagerstellenrings 11, der an einem Trägerring 12 gelagert ist. Die anschlusselementseitigen Lagerstellen 9 des Lagerstellenrings 11 greifen in der gezeigten Ausführungsform in die Nuten 10 der rohrseitigen Lagerstelle 8 ein.

Der Trägerring 12 ist ein vom Lagerstellenring 11 separat ausgebildetes Element, welches, wie in der Figur 1 und 2 gezeigt, mit dem Rohr 2 entsprechend verschiebbar verbunden werden kann. Hierfür weist der Trägerring 12 Führungen 44 auf, welche mit entsprechenden Nocken 45 am Rohr 2 verdrehsicher zusammenarbeiten. Der Eingriff der Führungen 44 zusammen mit den Nocken 45 wird in der Figur 2 genauer gezeigt. Die Führungen 44 sind im oberen Bereich mit Federstegen 54 begrenzt, welche die Montage des Trägerrings 12 am Rohr 2 vereinfacht.

Der Lagerstellenring 11 ist in einer umlaufenden Führungsnut 55 am Trägerring 12 bewegbar gelagert. Die Lagerung ist dabei derart, dass die besagte Kraft vom Rohr über den Lagerstellenring 11 auf den Trägerring 12 übertragbar ist. Der Lagerstellenring 11 ist vorzugsweise zweiteilig ausgebildet, wobei die beiden Teile des Lagerstellenrings 11 über eine Rastverbindung 46 miteinander in Verbindung stehen. Die Rastverbindung 46 ist dabei endseitig vom jeweiligen Teil angeordnet.

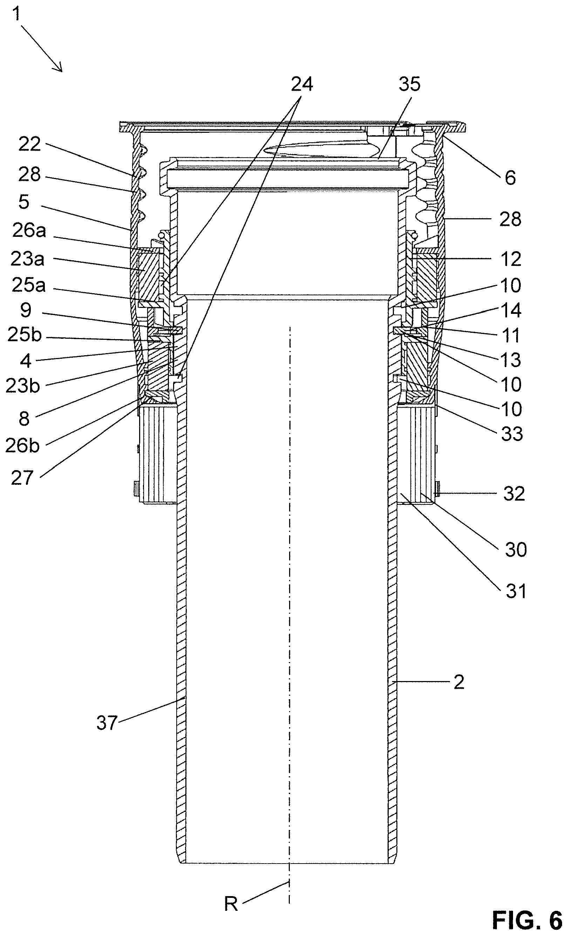

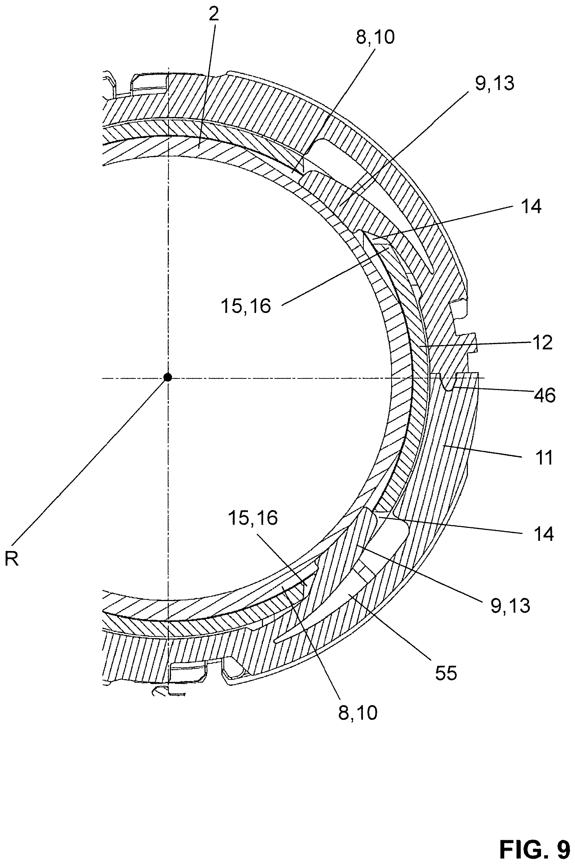

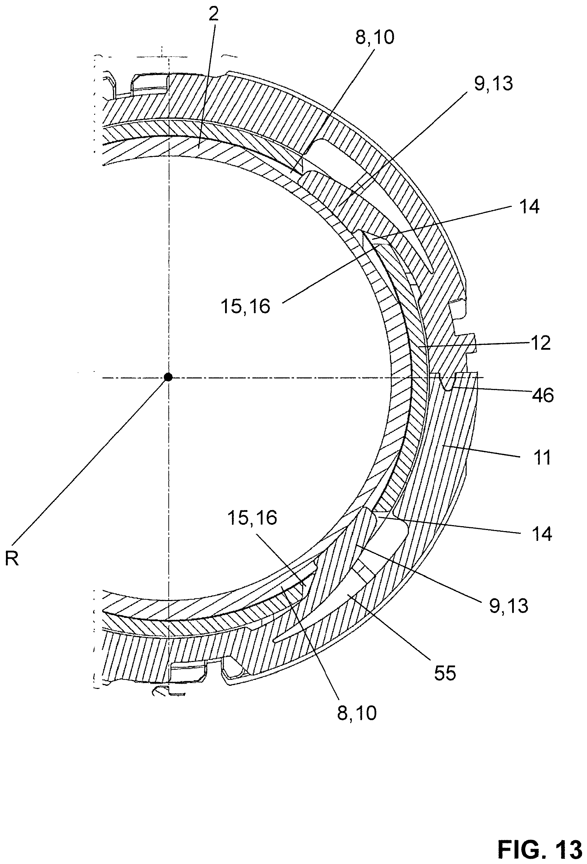

Die Lagerstelle 9 des Anschlusselementes 5 ist von einer Kontaktlage vom Rohr 2 weg in eine Einstelllage und von der Einstelllage in die Kontaktlage auf das Rohr 2 hin bewegbar ausgebildet. In der Schnittdarstellung der Figur 6 wird die Kontaktlage gezeigt. In der Kontaktlage greift die Lagerstelle 9 des Anschlusselementes 5 in die Lagerstelle 8 des Rohrs 2 ein, so dass die Gewichtskraft vom Rohr 2 über den Eingriff von der Lagerstelle 8 in die Lagerstelle 9 übertragen werden kann. Die Kontaktlage wird weiter im Querschnitt der Figur 9 gezeigt. In der Schnittdarstellung der Figur 13 befindet sich die Lagerstelle 8 des Anschlusselementes 5 in der Einstelllage. Dabei ist der Eingriff zwischen der anschlusselementseitigen Lagerstelle 9 und der rohrseitigen Lagerstelle 8 entsprechend aufgehoben. In dieser Stellung kann das Rohr 2 relativ zum Anschlusselement 5 verschoben werden, derart dass die anschlusselementseitige Lagerstelle 9 in eine andere der rohrseitigen Lagerstellen 8 am Rohr 2 eingreifen kann.

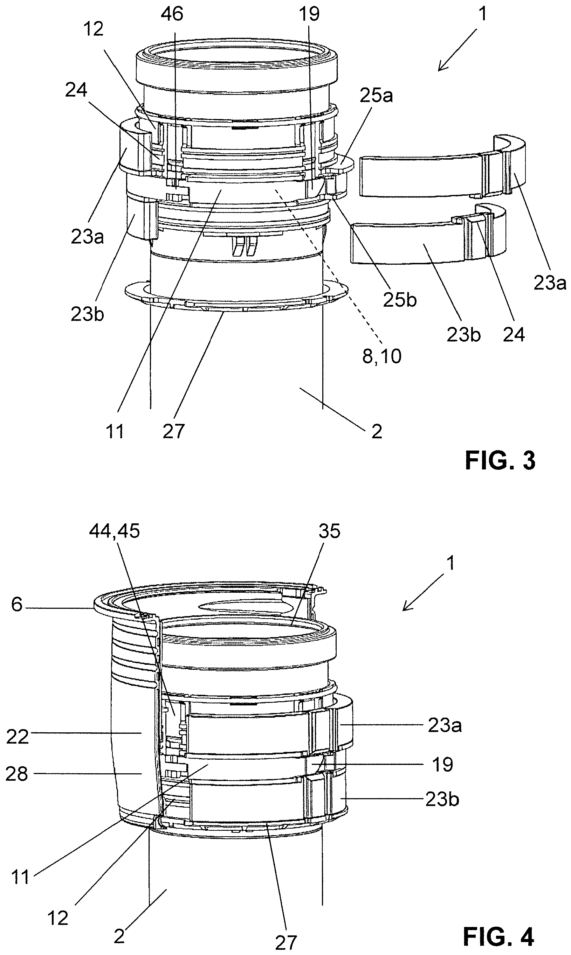

In der Kontaktlage ist die anschlusselementseitige Lagerstelle 9 mit einer der mindestens zwei rohrseitigen Lagerstellen 8 in einem tragfähigen Kontakt. Die Lagerstellen 8, 9 greifen dabei fest ineinander, so dass das Rohr 2 nicht mehr relativ zum Anschlusselement 5 verschoben werden kann. In der Einstelllage ist die anschlussseitige Lagerstelle 9 nicht in Kontakt mit den mindestens zwei rohrseitigen Lagerstellen 8. Dabei kann das Rohr 2 bezüglich des Anschlusselementes 5 in Richtung der Rohrachse R entsprechend verschoben werden. Die Verschiebbarkeit zwischen Rohr 2 und Anschlusselement 5 hat den Vorteil, dass die Lage des oberen Rohrendes 35 bezüglich der gebäudeseitigen Auflagefläche 7 bzw. bezüglich der Flanschfläche 6 entsprechend eingestellt werden kann. In den Figuren 3 und 4 wird gezeigt, dass das Anschlusselement 5 weiter ein Gehäuse 22 und entsprechende Schallentkoppelungselemente 23 umfasst. Die Flanschfläche 6 ist dabei Teil des Gehäuses 22. Die anschlusselementseitige Lagerstelle 9 steht über mindestens ein Schallentkoppelungselement 23 mit dem Gehäuse 22 in Verbindung. In der gezeigten Ausführungsform sind zwei Schallentkoppelungselemente 23 angeordnet, welche in Richtung der Rohrachse R beabstandet zueinander liegen. Durch die Anordnung der Schallentkoppelungselemente 23 steht der Trägerring 12 mit dem Gehäuse 22 derart in Verbindung, dass kein Körperschall vom Rohr 2 in das Gebäude eingeleitet werden kann. Die Gewichtskraft des Rohrs 2 wird über die Schallentkoppelungselemente 23 in das Gehäuse 22 eingeleitet.

Jedes der Schallentkoppelungselemente 23 ist zweiteilig ausgebildet. Jedes Teil des Schallentkoppelungselementes 23 ist im Querschnitt gesehen halbkreisförmig ausgebildet und umgibt in etwa die Hälfte des Rohrumfangs. Die jeweiligen Teile der Schallentkoppelungselemente 23 sind dabei identisch zueinander ausgebildet. Die Schallentkoppelungselemente 23 sind an Aufnahmen 24 am Trägerring 12 gelagert. Dabei umgeben die Schallentkoppelungselemente 23 den Trägerring 12 umfangsseitig mindestens teilweise bzw. hier im Wesentlichen vollständig.

Das obere der beiden Schallentkoppelungselemente trägt das Bezugszeichen 23a und liegt an einer vom Trägerring 12 abstehenden Fläche 25a auf. Das untere der Schallentkoppelungselemente trägt das Bezugszeichen 23b und liegt an einer vom Trägerring 12 abstehenden Fläche 25b auf. Auf Seiten des Gehäuses 22 liegt das obere Schallentkoppelungselement 23a an einer vom Gehäuse 22 abstehenden Fläche 26a auf. Das untere Schallentkoppelungselement 23b liegt an einer vom Gehäuse 22 abstehenden Fläche 26b auf. In der gezeigten Ausführungsform liegt das untere Schallentkoppelungselement 23b über einem Haltering 27 am Schallentkoppelungselement 23b auf.

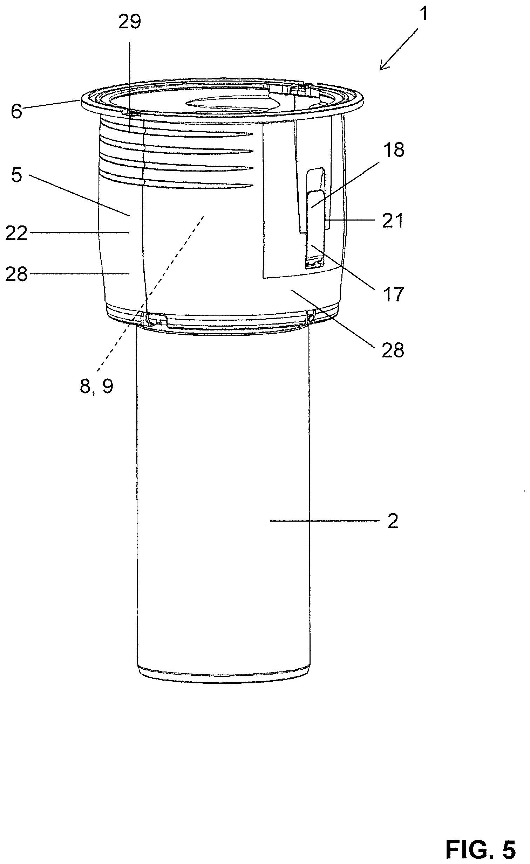

In der Figur 5 wird eine Ansicht der Verbindungsanordnung 1 mit geschlossenem Gehäuse 22 gezeigt. Dabei kann gut erkannt werden, dass das Gehäuse 22 aus zwei Gehäuseschalen 28 besteht, welche miteinander verbunden sind.

Anhand der Figur 6 wird nun der Übergang der Kraft vom Rohr 2 auf das Gehäuse 22 genauer erläutert. Das Rohr 2 steht hier über die rohrseitige Lagerstelle 8 mit der anschlusselementseitigen Lagerstelle 9 in Verbindung. Die Kraft wird über den Lagerstellenring 11 auf den Trägerring 12 übertragen. Vom Trägerring 12 wird dann die Kraft über das Schallentkoppelungselement 23a, 23b auf die entsprechenden Flächen 26a, 26b am Gehäuse 22 übertragen. Die Schallentkoppelungselemente 23a, 23b bilden in der Gebrauchslage den einzigen Kontakt zwischen dem Lagerstellenring 11 bzw. dem Trägerring 12 und dem Gehäuse 22, welches die Flanschfläche 6 aufweist. Das heisst Vibrationen vom Rohr werden nicht auf das Gehäuse 22 bzw. auf die Flanschfläche 6 übertragen. Somit kann eine Schallübertragung vom Rohr auf das Gebäude verhindert werden.

Bei der Figur 6 kann auch gut erkannt werden, wie die Lagerstellen 8 auf Seiten des Rohrs 2 beabstandet zueinander angeordnet sind. Die anschlusselementseitige Lagerstelle 9 kann in alle drei rohrseitigen Lagerstellen 8 entsprechend eingreifen. Hierdurch können verschiedene Einbausituationen abgebildet werden.

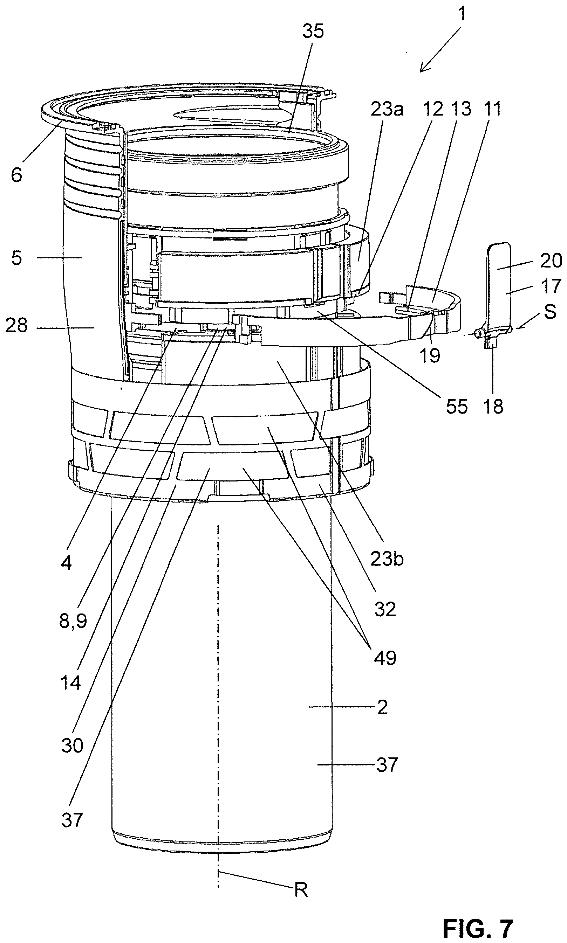

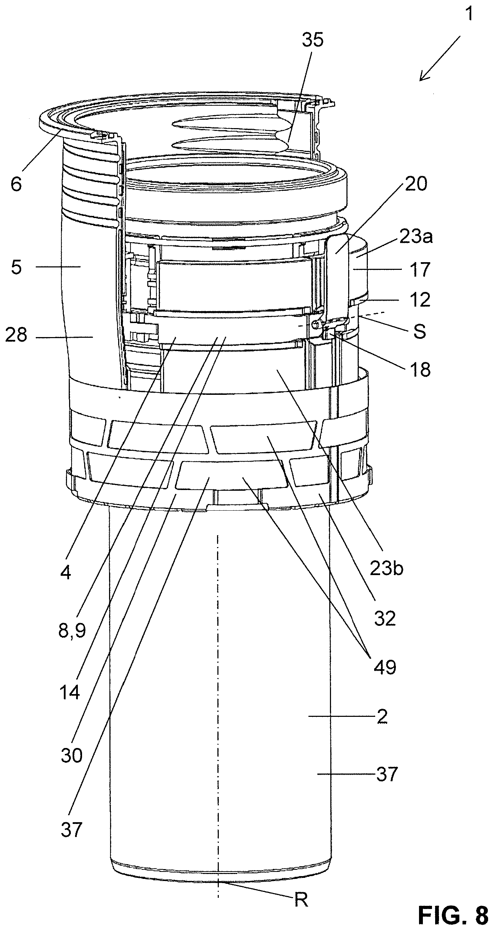

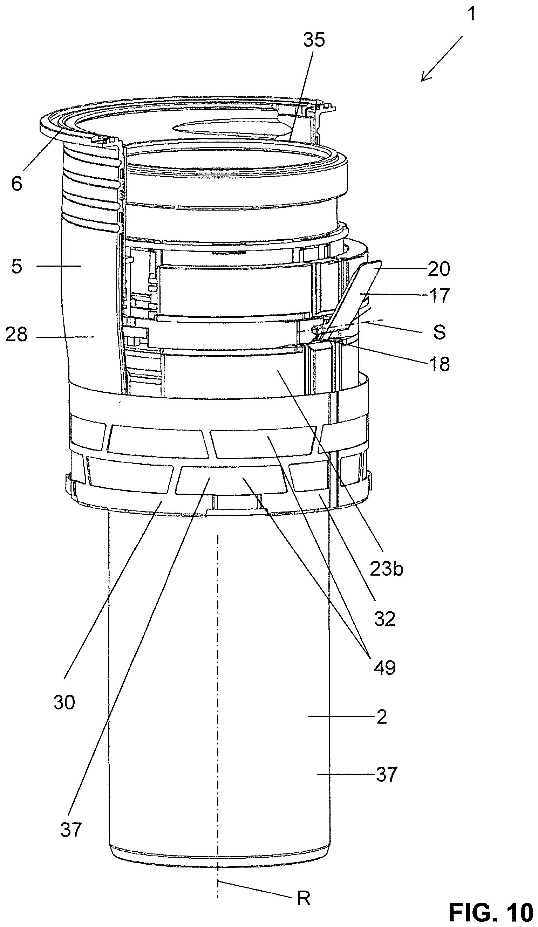

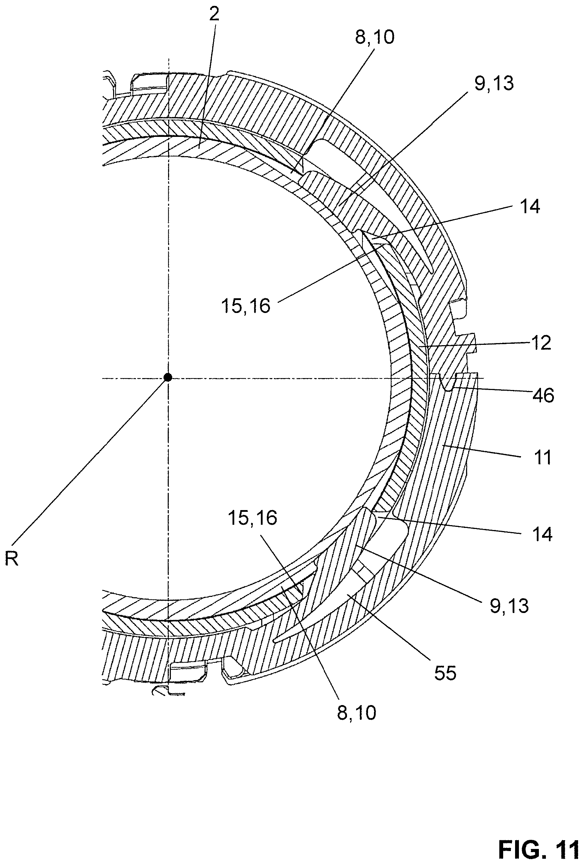

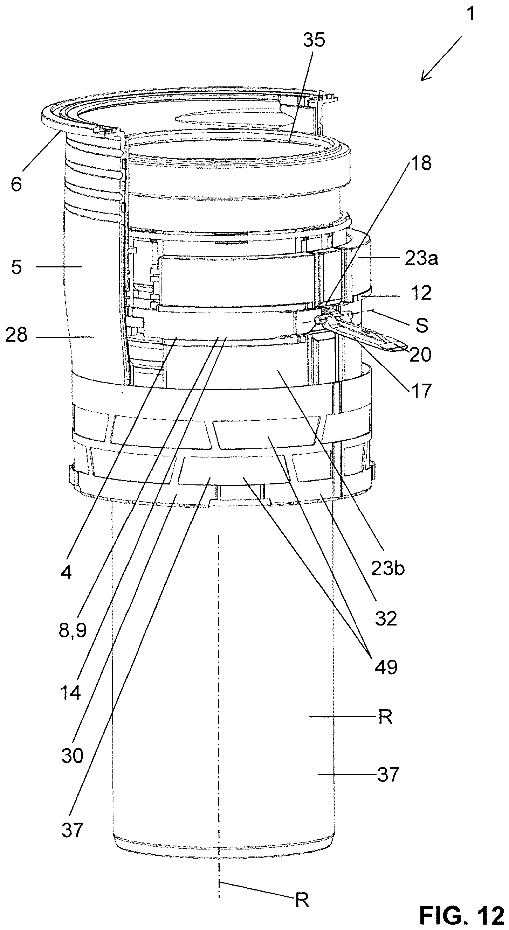

In der Figur 7 wird eine Explosionsdarstellung gezeigt. Dabei ist ein Teil des Lagerstellenrings 11 sowie ein Betätigungshebel 17, mit welchem der Lagerstellenring 11 betätigbar ist, beabstandet zum Rest des Anschlusselementes 5 dargestellt. Der Lagerstellenring 11 weist eine winklig geneigte Fläche 19 auf. In diese winklig geneigte Fläche 19 greift ein Aktuatorabschnitt 18 eines Betätigungshebels 17 ein. In den Figuren 8 und 9 befindet sich die anschlusselementseitige Lagerstelle 9 im Eingriff mit der rohrseitigen Lagerstelle 8. Hierbei greifen die entsprechenden Lagerlaschen 13 in die Nute 10 ein. Die Lagerlaschen 13 sind gefedert ausgebildete Lagerlaschen und stehen vom Lagerstellenring 11 entsprechend ab, was in der Figur 9 gut erkannt werden kann. Bei einer Betätigung des Betätigungshebels 17 über den Betätigungsabschnitt 20 wird der Betätigungshebel 17 entsprechend verschwenkt, sowie in der Figur 10 gezeigt. Dabei trifft der Aktuatorabschnitt 18 auf die winklig geneigte Fläche 19 am Lagerstellenring 11 auf und verschwenkt dabei den Lagerstellenring 11 relativ zum Trägerring 12. Die Verschwenkung des Lagerstellenrings 11 wird in der Figur 11 gezeigt. Die Lagerlaschen 13 weisen ebenfalls winklig geneigte Flächen 16 auf, welche an einem Randbereich 15 eines Durchbruchs 14 im Trägerring 11 anstehen. Durch die Verschwenkung des Lagerstellenrings 11 relativ zum Trägerring 12 werden die Lagerlaschen 13 dann radial nach aussen bewegt, was in der Figur 11 gezeigt wird. Bei weiterem Fortbewegen des Betätigungshebels 17 wird der Lagerstellenring 11 weiter vorgeschoben, sowie in den Figuren 12 und 13 gezeigt. Dabei werden die Lagerlaschen 13 entsprechend aus der Nute 10 am Rohr 2 bewegt und gleiten in den Durchbruch 14 am Trägerring 13 ein, wodurch sich die Lagerstelle 9 mit ihren Lagerlaschen 13 in der entsprechenden Einstelllage befindet. Das Rohr 2 kann dabei relativ zum Anschlusselement 5 bewegt werden.

Die Rückstellung des Lagerstellenrings 11 nach Betätigung durch den Betätigungshebel 17 kann auf verschiedene Arten erfolgen. Typischerweise wird der Betätigungshebel 17 wieder in seine Ausgangslage, sowie in der Figur 8 und 9 gezeigt, verschoben. Dabei kommt der Aktuatorabschnitt 18 ausser Eingriff mit der winklig geneigten Fläche 19. Ein entsprechendes Federelement stellt dann den Lagerstellenring 11 wieder zurück, sodass die rohrseitige Lagerstelle 8 in die anschlussseitige Lagerstelle 9 entsprechend eingreift. Alternativerweise kann die Rückstellung auch durch die Lagerlasche 13 selbst erfolgen. Beispielsweise durch eine entsprechende Form der Lagerlasche 13.

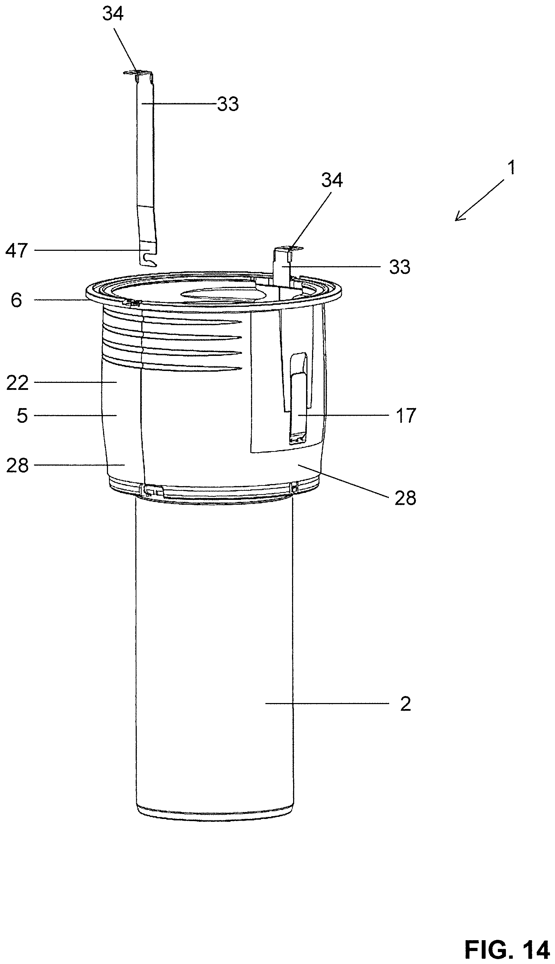

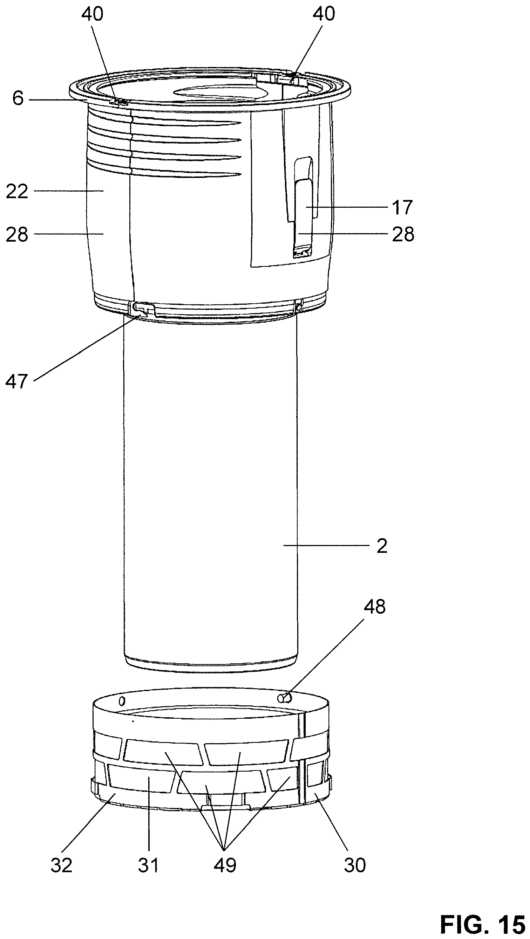

Weiter weist die Verbindungsanordnung 1 ein Brandschutzelement 30 auf. Das Brandschutzelement 30 und dessen Anordnung wird anhand der Figuren 14 bis 17 genauer erläutert. Das Brandschutzelement 30 umfasst einen Intumeszenzmantel 31, der in einem Metallkäfig 32 gelagert ist. Das Brandschutzelement 30 wird über zwei Metallbügel 33 mit dem Anschlusselement 5 verbunden. Die Metallbügel 33 ragen dabei durch das Gehäuse 22 hindurch und stehen mit einem Anschlagsabschnitt 32 im oberen Bereich an der Flanschfläche 6 an. Der Anschlagsabschnitt 34 erstreckt sich in einer Richtung quer zur Rohrachse gesehen über den gesamten Querschnitt der Flanschfläche 6. Die Metallbügel 33 weisen nach unten hin eine Aufnahmestruktur 47 auf, welche der Lagerung des Metallkäfigs 32 dient. Dabei ist die Aufnahmestruktur 47 als eine Art Bajonettverschluss ausgebildet. Zapfen 48 am Metallkäfig 32 greifen in die Aufnahmestruktur 47 ein.

Der Metallkäfig 32 weist verschiedene Durchbrüche 49 auf, durch welche das Intumeszenzmaterial des Intumeszenzmantel 31 im Brandfall aufquellen kann, sodass der Querschnitt des Zwischenraums zwischen Gebäudeöffnung 3 und Rohr 2 entsprechend mit dem Intumeszenzmaterial aufgeschäumt wird.

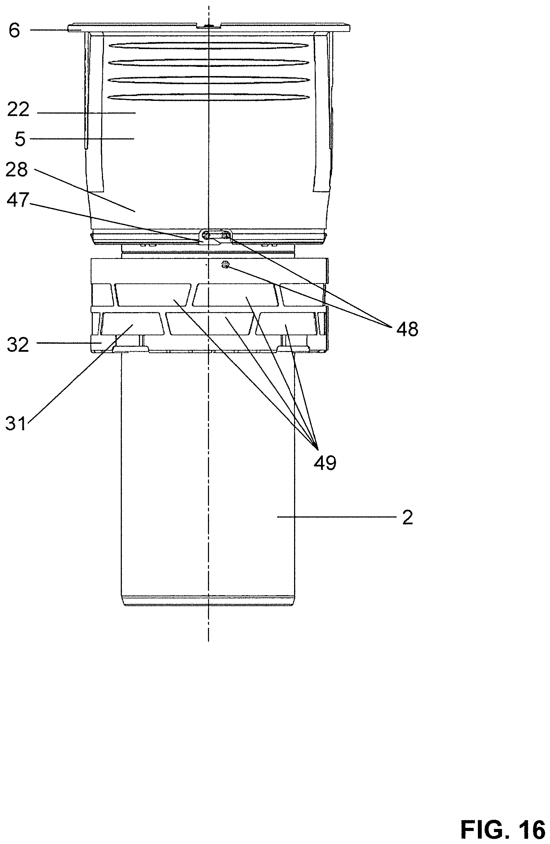

In der Figur 16 wird die Lagerung des Metallkäfigs 32 an der Aufnahmestruktur 47 genauer gezeigt. Der Zapfen 48 ist dabei in verschiedenen Positionen gezeigt. Grundsätzlich wird das Brandschutzelement 30 in Richtung der Rohrachse bewegt und anschliessend wird das Brandschutzelement 30 um die Rohrachse R verschwenkt, so dass der Zapfen 48 in die Aufnahmestruktur 47 zu liegen kommt.

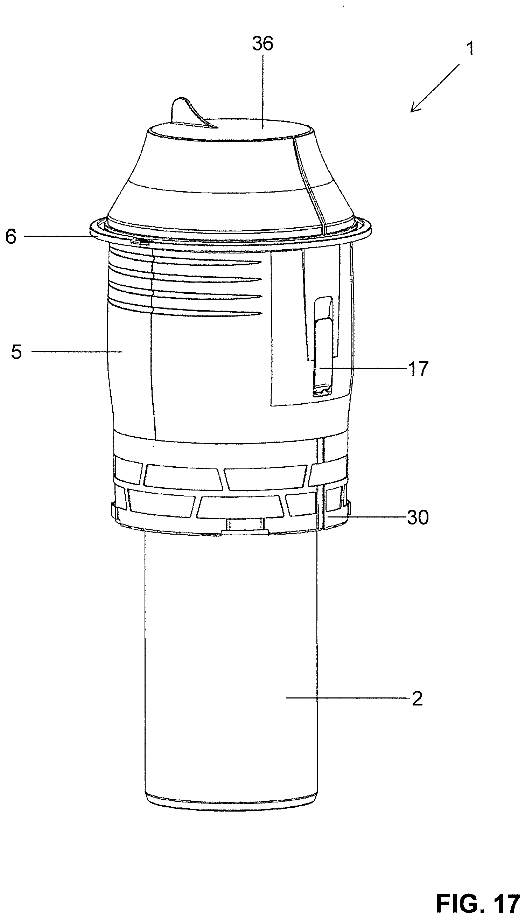

In der Figur 17 wird weiter gezeigt, dass im Bereich des oberen Rohrendes 35 ein erster Bauschutz angeordnet ist. Der erste Bauschutz trägt das Bezugszeichen 36 und schützt im Wesentlichen das Rohr 2 sowie den Innenraum des Anschlusselementes 5 vor Verunreinigungen.

In der Figur 18 wird die Verbindungsanordnung 1 mit dem Anschlusselement 5 und dem Rohr 2 kurz vor dem Einbau in die Gebäudeöffnung 3 gezeigt. Die Verbindungsanordnung 1 wird in Richtung des Pfeils P in die Gebäudeöffnung 3 montiert. Hierbei trägt die gesamte Anordnung ein weiteres Bauschutzelement 38, welches sich in Richtung eines Rohrbereichs 37 erstreckt. Das weitere Bauschutzelement 38 steht in Verbindung mit dem Brandschutzelement 30.

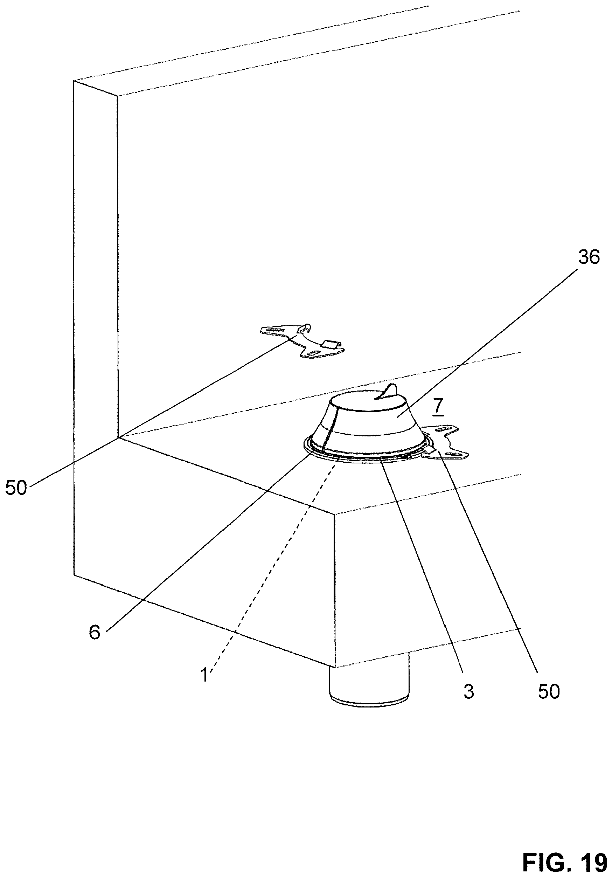

In der Figur 19 wird dann die Befestigung des Anschlusselementes 5 in der Gebäudeöffnung 3 gezeigt. Hierfür sind entsprechende Klammern 50 vorgesehen, welche mit dem Gebäude verbunden werden und auf die Flanschfläche 6 des Anschlusselementes 5 wirken. Bei der Sicherung mit der Klammer handelt es sich um eine erste Art der mechanischen Befestigung.

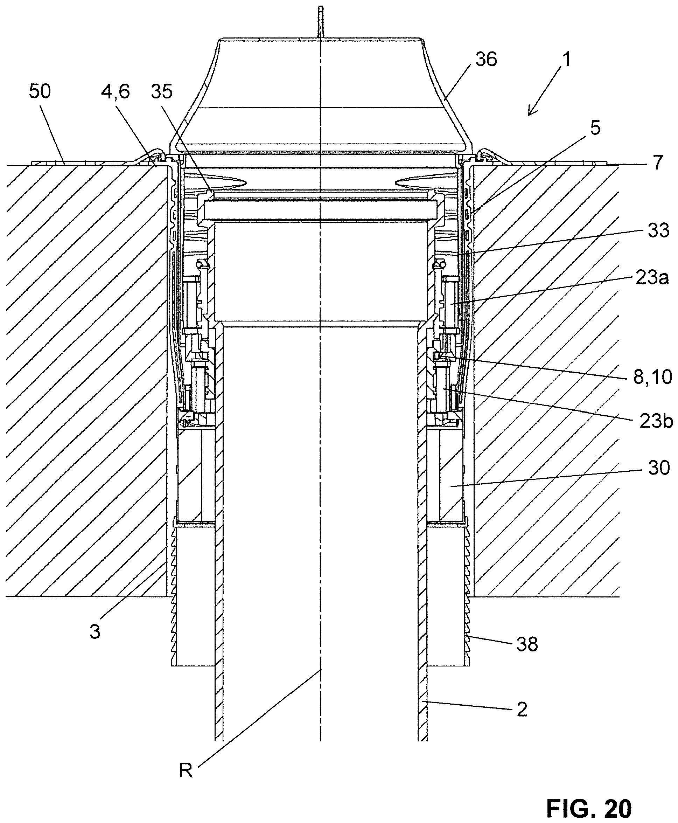

Die Figur 20 zeigt eine entsprechende Schnittdarstellung der Einbaulage. In der Figur 20 sind zudem auch die beiden Bauschütze 36, 38 gezeigt. Diese können nach Erfolg der Montage entfernt werden.

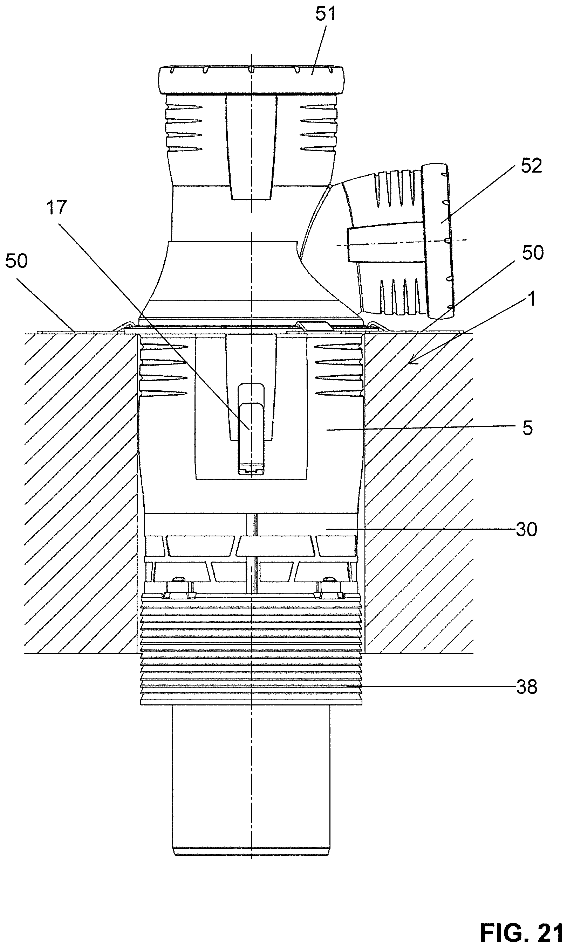

In der Figur 21 wird ein Anschlussstück 51 gezeigt, welches mit dem oberen Rohrende 35 in Kontakt ist. In diesem Zusammenhang kann gut erkannt werden, wie wichtig die Einstellung des Rohres 2 relativ zum Anschlusselement 5 ist. Somit kann der eine Abzweiger vom Anschlussstück 51, der das Bezugszeichen 52 trägt, entsprechend nahe am Lagerbereich 4 des Gebäudes gebracht werden. Hierdurch kann beispielsweise das Gefälle eines mit dem Abzweiger 52 in Verbindung stehenden Rohrs ausgenützt werden.

In den Figuren 22 bis 25 wird eine alternative Lagerung des Anschlusselementes 5 gezeigt. Es handelt sich dabei um ein System, welches das Anschlusselement 5 gemäss obiger Beschreibung sowie das Rohr 2 umfasst. Weiter umfasst das System ein Halteelement 39. Das Halteelement 39 umfasst einen Befestigungsbügel 40 zur Befestigung des Halteelementes 39 an einer Wand W und ein Lagerteil 41. Das Lagerteil 41 dient der Lagerung des Anschlusselementes 5 und umgreift im Wesentlichen die Flanschfläche 6 des Anschlusselementes 5. Das Lagerteil 41 steht mit den Befestigungsbügel 40 in entsprechender Verbindung. Hier ist die Verbindung eine Längsführung 42. Das heisst, das Lagerteil 41 kann mit dem Anschlusselement 5 relativ zum Befestigungsbügel 40 in der Längsführung verschoben werden. Weiter ist im Bereich der Längsführung ein Rastmittel 43 angeordnet. Mit dem Rastmittel 43 kann die Lage zwischen dem Lagerteil 41 und dem Befestigungsbügel 40 arretiert werden. Hierbei wird das Rastmittel 43 in die Längsführung eingeschoben und bildet eine Klemmwirkung zwischen dem Lagerteil 41 und dem Befestigungsbügel 40 in der Längsführung.

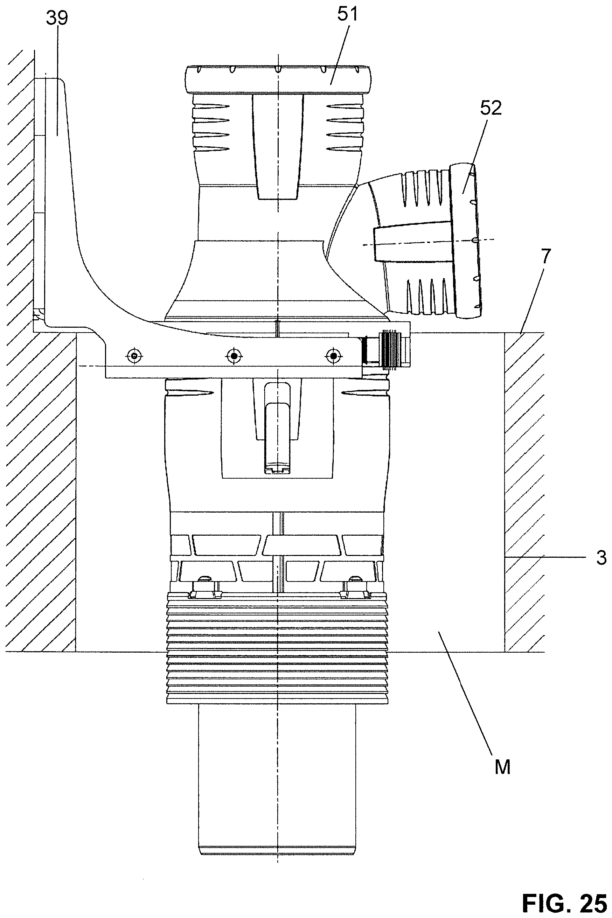

Für die Befestigung an einer Wand weist der Befestigungsbügel 40 eine Vielzahl von Befestigungsöffnungen 53 auf, durch welche Schraubenmittel hindurchgeführt werden können. Mit dem System gemäss den Figuren 22 bis 25 wird es, so wie in der Figur 25 gezeigt, ermöglicht, dass eine flexiblere Einsatzmöglichkeit für die Verbindungsanordnung 1 ermöglicht wird.

In der Figur 25 wird weiter gezeigt, dass der Zwischenraum zwischen der Verbindungsanordnung 1 und der Gebäudeöffnung 3 mit Mörtel M aufgefüllt werden kann.

### BEZUGSZEICHENLISTE

| | | | |
|---|---|---|---|
| 1 | Verbindungsanordnung | 30 | Brandschutzelement |
| 2 | Rohr | 31 | Intumeszenzmantel |
| 3 | Gebäudeöffnung | 32 | Metallkäfig |
| 4 | Lagerbereich | 33 | Metallbügel |
| 5 | Anschlusselement | 34 | Anschlagsabschnitt |
| 6 | Flanschfläche | 35 | oberes Rohrende |
| 7 | gebäudeseitig Auflagefläche | 36 | Bauschutz |
| 8 | rohrseitige Lagerstelle | 37 | Rohrbereich |
| 9 | anschlusselementseitige Lagerstelle | 38 | Bauschutz |
| | | 39 | Halteelement |
| 10 | Nute | 40 | Befestigungsbügel |
| 11 | Lagerstellenring | 41 | Lagerteil |
| 12 | Trägerring | 42 | Längsführung |
| 13 | Lagerlaschen | 43 | Rastmittel |
| 14 | Durchbruch | 44 | Führungen |
| 15 | Randbereich | 45 | Nocken |
| 16 | winklig geneigte Fläche | 46 | Rastverbindung |
| 17 | Betätigungshebel | 47 | Aufnahmestruktur |
| 18 | Aktuatorabschnitt | 48 | Zapfen |
| 19 | winklig geneigte Fläche | 49 | Durchbrüche |
| 20 | Betätigungsabschnitt | 50 | Klammer |
| 21 | Rastelement | 51 | Anschlussstück |
| 22 | Gehäuse | 52 | Abzweiger |
| 23 | Schallentkoppelungselement | 53 | Befestigungsöffnungen |
| 24 | Aufnahmen | 54 | Federsteg |
| 25 | Fläche | 55 | Führungsnut |
| 26 | Fläche | R | Rohrachse |
| 27 | Haltering | S | Schwenkachse |
| 28 | Gehäuseschalen | M | Mörtel |
| 29 | Rastelemente | | |

## Patentansprüche

1. Verbindungsanordnung (1) zur Verbindung eines Rohrs (2) mit einem Gebäude im Bereich einer Gebäudeöffnung (3) umfassend
ein durch die Gebäudeöffnung (3) hindurchzuführendes Rohr (2) mit einem aussenseitig angeordneten Lagerbereich (4) und
ein Anschlusselement (5), welches mit dem Lagerbereich (4) des Rohrs (2) verbindbar ist und welches eine Flanschfläche (6) aufweist, mit welcher das Anschlusselement (5) auf einer gebäudeseitigen Auflagefläche (7) lagerbar ist,
wobei der Lagerbereich (4) des Rohrs (2) mindestens zwei in Richtung der Rohrachse (R) beabstandet zueinander angeordnete Lagerstellen (8) aufweist,
wobei das Anschlusselement (5) eine Lagerstelle (9) aufweist, wobei die besagte anschlusselementseitige Lagerstelle (9) von einer Kontaktlage vom Rohr (2) weg in eine Einstelllage und von der Einstelllage in die Kontaktlage auf das Rohr (2) hin bewegbar ausgebildet ist,
wobei in der Kontaktlage die anschlusselementseitige Lagerstelle (9) mit einer der mindestens zwei rohrseitigen Lagerstellen (8) in einen tragfähigen Kontakt bringbar ist, und
wobei in der Einstelllage die anschlusselementseitige Lagerstelle (9) nicht in Kontakt mit den mindestens zwei rohrseitigen Lagerstellen (8) ist, so dass das Rohr (2) bezüglich des Anschlusselementes (5) in Richtung der Rohrachse (R) verschiebbar ist, **dadurch gekennzeichnet, dass** die anschlusselementseitige Lagerstelle (9) Teil eines Lagerstellenrings (11) ist, der an einem zum Anschlusselement (5) gehörenden Trägerring (12) um den Umfang des Trägerrings (12) verschwenkbar angeordnet ist, wobei durch die Verschwenkung die anschlusselementseitige Lagerstelle (9) zwischen der Kontaktlage und der Einstelllage hin und her bewegbar ist.

2. Verbindungsanordnung (1) nach Anspruch 1, **dadurch gekennzeichnet, dass** die mindestens zwei rohrseitigen Lagerstellen (8) als Nuten (10) ausgebildet sind, wobei pro Lagerstelle (8) mehrere Nuten (10), die sich nur über einen Teilbereich des Rohrumfangs erstrecken, angeordnet sind; oder wobei pro Lagerstelle (8) eine vollständig um den Rohrumfang umlaufende Nute (10) angeordnet ist.

3. Verbindungsanordnung (1) gemäss einem der vorhergehenden Ansprüche, **dadurch gekennzeichnet, dass** die anschlusselementseitige Lagerstelle (9) mehrere vom Lagerstellenring (11) abstehende Lagerlaschen (13) sind, welche durch einen Durchbruch (14) im Trägerring (12) zu den rohrseitigen Lagerstellen (8) hindurchragen, wobei die Lagerlaschen (13) und/oder der Randbereich (15) des Durchbruches (14) eine winklig geneigte Fläche (16) aufweist, welche derart winklig geneigt ist, dass bei einer Bewegung des Lagerstellenrings (11) relativ zum Trägerring (12) die Lagerlaschen (13) von der Kontaktlage in die Einstelllage in den Durchbruch (14) hinein bewegt werden.

4. Verbindungsanordnung (1) nach einem der vorhergehenden Ansprüche, **dadurch gekennzeichnet, dass** die Verbindungsanordnung (1) weiterhin einen Betätigungshebel (17) umfasst, welcher an einer Schwenkachse (S) am Anschlusselement (5) gelagert ist, wobei der Betätigungshebel (17) mit einem Aktuatorabschnitt (18) an eine winklig geneigte Fläche (19) am Lagerstellenring (11) eingreift und mit einem Betätigungsabschnitt (20) um die Schwenkachse (S) verschwenkbar ist, wobei bei einer Verschwenkung des Betätigungshebels (17) der Aktuatorabschnitt (18) derart zur winklig geneigten Fläche (19) bewegt wird, dass der Lagerstellenring (11) relativ zum Trägerring (12) um die Rohrachse (R) von der Kontaktlage in die Einstelllage bewegt wird.

5. Verbindungsanordnung (1) nach Anspruch 4, **dadurch gekennzeichnet, dass** der Betätigungshebel (17) in mindestens einer seiner Endlagen an einem Rastelement (21) einrastet.

6. Verbindungsanordnung (1) nach einem der vorhergehenden Ansprüche, **dadurch gekennzeichnet, dass** das Anschlusselement (5) ein Gehäuse (22) umfasst, wobei die Flanschfläche (6) Teil des Gehäuses (22) ist, und wobei die anschlusselementseitige Lagerstelle (9) über mindestens ein Schallentkoppelungselement (23) im Gehäuse (22) gelagert ist.

7. Verbindungsanordnung (1) nach Anspruch 6, **dadurch gekennzeichnet, dass** das mindestens eine Schallentkoppelungselement (23) an Aufnahmen (24) am Trägerring (12) gelagert ist,
wobei die Schallentkoppelungselemente (23) den Trägerring (12) umfangsseitig mindestens teilweise oder vollständig umgeben; und/oder
wobei jedes der Schallentkoppelungselemente (23) vorzugsweise aus mindestens zwei Teilen (24) besteht, wobei sich jeder Teil (24) im Wesentlichen um einen gleichen Teil der Umfangsseite des Trägerrings (12) erstreckt.

8. Verbindungsanordnung (1) nach Anspruch 6 oder 7, **dadurch gekennzeichnet, dass** mehrere Schallentkoppelungselemente (23) in Richtung der Rohrachse (R) beabstandet am Trägerring (12) zueinander angeordnet sind, wobei eines der Schallentkoppelungselemente (23a) an einer von Trägerring (12) abstehenden Fläche (25a) und an einer von Gehäuse (22) abstehenden Fläche (26a) aufliegen und wobei ein anderes der Schallentkoppelungselemente (23b) an einer von Trägerring (12) abstehenden Fläche (25b) und an einer von Gehäuse (22) abstehenden Fläche (26b), insbesondere über einen Haltering (27) aufliegen.

9. Verbindungsanordnung (1) nach Anspruch 7 oder 8, **dadurch gekennzeichnet, dass** das Gehäuse (22) mindestens zwei Gehäuseschalen (28) umfasst, welche Gehäuseschalen (28) mit Rastelementen (29) miteinander verbindbar sind.

10. Verbindungsanordnung (1) nach Anspruch 4 und einem der Ansprüche 6 bis 9, **dadurch gekennzeichnet, dass** der Betätigungshebel (17) am Gehäuse (22) gelagert ist und zum Gehäuse (22) verschwenkbar ist.

11. Verbindungsanordnung (1) nach einem der vorhergehenden Ansprüche, **dadurch gekennzeichnet, dass** die Verbindungsanordnung (1) gegenüber der Flanschfläche (6) ein Brandschutzelement (30) umfasst, wobei das Brandschutzelement (30) ein um das Rohr (2) umlaufender Intumeszenzmantel (31), der in einem Metallkäfig (32) gelagert ist, umfasst, wobei der Metallkäfig (32) über Metallbügel (33), die sich durch die Verbindungsanordnung (1) hindurch bis zur Flanschfläche (6) erstrecken und mit einem Anschlagsabschnitt (34) auf der Flanschfläche (6) aufliegen, gehalten wird.

12. Verbindungsanordnung (1) nach einem der vorhergehenden Ansprüche, **dadurch gekennzeichnet, dass** im Bereich des oberen Rohrendes (35) ein den Rohrquerschnitt und den offenen Querschnitt des Anschlusselementes (5) verschliessenden Bauschutz (36) vorgesehen ist; und/oder dass im Bereich des Rohrbereichs (37) ein Bauschutz (38) vorgesehen ist, der sich entlang des Rohrs (2) erstreckt.

13. System umfassend eine Verbindungsanordnung (1) nach einem der vorhergehenden Ansprüche und ein Halteelement (39) umfassend einen Befestigungsbügel (40) zur Befestigung des Halteelementes (39) an einer Wand (W) und ein Lagerteil (41) zur Lagerung des Anschlusselements (5), wobei der Befestigungsbügel (40) und das Lagerteil (41) über eine Längsführung (42) miteinander in Verbindung stehen.

14. System nach Anspruch 13, **dadurch gekennzeichnet, dass** das Lagerteil (41) das Anschlusselement (5) im Wesentlichen vollständig umgibt und mit der Flanschfläche (6) in Kontakt steht und/oder dass die Längsführung (42) Rastmittel (43) aufweist, so dass die Lage zwischen Lagerteil (41) und Befestigungsbügel (40) arretiert werden kann.

## Claims

1. Connection arrangement (1) for connecting a pipe (2) to a building in the region of an opening (3) of the building, comprising
a pipe (2) which is to be guided through the opening (3) of the building and which comprises an externally arranged bearing region (4), and
a connecting element (5) which is connectable with the bearing region (4) of the pipe (2) and which comprises a flange surface (6), by which the connecting element (5) can be mounted on a support surface (7) on the building side,
wherein the bearing region (4) of the pipe (2) comprises at least two bearing sites (8) which are arranged in the direction of the pipe axis (R) in a spaced apart manner,
wherein the connecting element (5) comprises a bearing site (9), wherein said bearing site (9) arranged on the side of the connecting element is formed in a way that it can be moved from a contact position away from the pipe (2) into an adjustment position and from the adjustment position toward the pipe (2) into the contact position,
wherein in the contact position the bearing site (9) arranged on the side of the connecting element can be brought into a bearing contact with one of the at least two bearing sites (8) arranged on the pipe side,
and wherein in the adjustment position the bearing site (9) arranged on the side of the connecting element is not in contact with the at least two bearing sites (8) arranged on the pipe side, such that the pipe (2) can be displaced with respect to the connecting element (5) in the direction of the pipe axis (R),
**characterized in that**
the bearing site (9) arranged on the side of the connecting element is part of a bearing site ring (11), which is arranged in a pivotable manner on a carrier ring (12) belonging to the connecting element (5), about the circumference of the carrier ring (12), wherein by the pivot movement the bearing site (9) arranged on the side of the connecting element is movable back and forth between the contact position and the adjustment position.

2. Connection arrangement (1) according to claim 1, **characterized in that** the at least two bearing sites (8) which are arranged on the pipe side are formed as grooves (10), wherein per bearing site (8) several grooves (10) which only extend over a partial region of the pipe circumference are provided; or wherein per bearing site (8) one groove (10) which extends entirely around the circumference of the pipe is provided.

3. Connection arrangement (1) according to one of the preceding claims, **characterized in that** the bearing site (9) arranged on the side of the connecting element is formed by several bearing tabs (13) projecting from the bearing site ring (11), and extending through a breakthrough (14) in the carrier ring (12) to the bearing sites (8) arranged on the pipe side, wherein the bearing tabs (13) and/or the edge region (15) of the breakthrough (14) comprises an angularly inclined surface (16), which is inclined in an angular manner such that during a movement of the bearing site ring (11) with respect to the carrier ring (12) the bearing tabs (13) are moved from the contact position into the adjustment position into the breakthrough (14).

4. Connection arrangement (1) according to one of the preceding claims, **characterized in that** the connection arrangement (1) furthermore comprises an actuating lever (17), which is mounted on a pivot axis (S) on the connecting element (5), wherein the actuating lever (17) engages with an actuator section (18) on an angularly inclined surface (19) on the bearing site ring (11) and is pivotable about the pivot axis (S) with an actuating section (20), wherein during a pivot movement of the actuating lever (17) the actuating section (18) is moved with respect to the angularly inclined surface (19) such that the bearing site ring (11) is moved with respect to the carrier ring (12) about the pipe axis (R) from a contact position to an adjustment position.

5. Connection arrangement according to claim 4, **characterized in that** the actuating lever (17) latches in on a latching element (21) in at least one of its end positions.

6. Connection arrangement according to one of the preceding claims, **characterized in that** the connecting element (5) comprises a housing (22), wherein the flange surface (6) is part of the housing (22), and wherein the bearing site (9) arranged on the side of the connecting element (9) is mounted in the housing via at least one acoustic decoupling element (23).

7. Connection arrangement according to claim 6, **characterized in that** the at least one acoustic decoupling element (23) is mounted on seats (24) on the carrier ring (12), wherein the acoustic decoupling elements (23) at least partially or entirely circumferentially enclose the carrier ring (12); and/or wherein each of the acoustic decoupling elements (23) preferable consists of at least two parts (24), wherein each part (24) extends essentially around a same part of the circumferential side of the carrier ring (12).

8. Connection arrangement (1) according to claim 6 or 7, **characterized in that** several acoustic decoupling elements (23) are arranged in the direction of the pipe axis (R) in a spaced apart manner on the carrier ring (12), wherein one of the acoustic decoupling elements (23a) is supported on a surface (25a) projecting from the carrier ring (12) and on a surface (26a) projecting from the housing (22), and wherein another one of the acoustic decoupling elements (23b) is supported on a surface (25b) projecting from the carrier ring (12) and on a surface (26b) projecting from the housing (22), in particular via a retaining ring (27).

9. Connection arrangement (1) according to claim 7 or 8, **characterized in that** the housing (22) comprises at least two housing shells (28), which housing shells (28) are connectable to each other by means of latching elements (29).

10. Connection arrangement (1) according to claim 4 and one of claims 6 to 9, **characterized in that** the actuating lever (17) is mounted on the housing (22) and is pivotable with respect to the housing (22).

11. Connection arrangement (1) according to one of the preceding claims, **characterized in that** the connection arrangement (1) comprises a fire protection element (30) across from the flange surface (6), wherein the fire protection element (30) comprises an intumescence jacket (31) encircling the pipe (2) and being mounted in a metal cage (32), wherein the metal cage (32) is held by means of metal brackets (33) which extend through the connection arrangement (1) to the flange surface (6) and are supported with an abutment section (34) on the flange surface (6).

12. Connection arrangement (1) according to one of the preceding claims, **characterized in that** in the region of the upper pipe end (35), a building protection (36) is provided which closes the pipe cross section and the open cross section of the connecting element (5); and/or that in the region of the pipe region (37) a building protection (38) is provided, which extends along the pipe (2).

13. System, comprising a connection arrangement (1) according to one of the preceding claims and a holding element (39) comprising a fastening bracket (40) for the fastening of the holding element (39) on a wall (W) and a bearing part (41) for mounting the connecting element (5), wherein the fastening bracket (40) and the bearing part (41) are in connection with each other via a longitudinal guide (42).

14. System according to claim 13, **characterized in that** the bearing part (41) essentially entirely encloses the connecting element (5) and is in contact with the flange surface (6) and/or that the longitudinal guide (42) comprises latching means (43), such that the position between the bearing part (41) and the fastening bracket (40) can be locked.

## Revendications

1. Un agencement de liaison (1) pour relier un tuyau (2) à un bâtiment dans la zone d'une ouverture de bâtiment (3) comprenant
un tuyau (2) devant être guidé à travers l'ouverture de bâtiment (3) avec une zone de montage (4) disposée à l'extérieur et
un élément de raccordement (5), qui peut être relié à la zone de montage (4) du tuyau (2) et qui présente une surface de bride (6), avec lequel l'élément de raccordement (5) peut être monté sur une surface d'appui (7) côté bâtiment,
dans lequel la zone de montage (4) du tuyau (2) présente au moins deux points de montage (8) disposés à distance l'un de l'autre dans la direction de l'axe du tuyau (R),
dans lequel l'élément de raccordement (5) présente un point de montage (9), dans lequel ledit point de montage (9) du côté de l'élément de raccordement est conçu pour être déplacé d'une position de contact en s'éloignant du tuyau (2) vers une position de réglage et de la position de réglage vers la position de contact en s'approchant du tuyau (2),
dans lequel, dans la position de contact, le point de montage (9) du côté de l'élément de raccordement (5) peut être mis en contact portant avec l'un des au moins deux points de montage (8) du côté du tuyau dans un contact de support de charge, et
dans lequel, dans la position de réglage, le point de montage (9) du côté de l'élément de raccordement n'est pas en contact avec les au moins deux points de montage (8) du côté du tuyau, de sorte que le tuyau (2) peut être déplacé par rapport à l'élément de raccordement (5) dans la direction de l'axe du tuyau (R), **caractérisé en ce que** le point de montage (9) du côté de l'élément de raccordement fait partie d'une bague de point de montage (11), qui est disposée sur une bague porteuse (12) appartenant à l'élément de raccordement (5) de manière pivotante autour de la circonférence de la bague porteuse (12), dans lequel par le biais du pivotement, le point de montage (9) du côté de l'élément de raccordement peut être déplacé entre la position de contact et la position de réglage.

2. Agencement de liaison (1) selon la revendication 1, **caractérisé en ce que** les au moins deux points de montage (8) du côté du tuyau sont réalisés sous forme de rainures (10), où plusieurs rainures (10) sont agencées par point de montage (8) s'étendant uniquement sur une zone partielle de la circonférence du tuyau; ou où une rainure (10) est agencée par point de montage (8) s'étendant complètement autour de la circonférence du tuyau.

3. Agencement de liaison (1) selon l'une des revendications précédentes, **caractérisé en ce que** les points de montage (9) du côté de l'élément de raccordement sont plusieurs languettes de montage (13) dépassant la bague de point de montage (11), lesquelles traversent une percée (14) dans la bague de point de montage (12) jusqu'aux points de montage (8) du côté du tuyau, dans lequel les languettes de montage (13) et / ou la zone de bord (15) de la percée (14) ont une surface inclinée (16), laquelle est inclinée de manière angulaire de telle sorte que les languettes de montage (13) sont déplacées dans la percée (14) depuis la position de contact vers la position de réglage lors d'un déplacement de la bague de point de montage (11) par rapport à la bague de point de montage (12).

4. Agencement de liaison (1) selon l'une des revendications précédentes, **caractérisé en ce que** l'agencement de liaison (1) comprend en outre un levier d'actionnement (17), qui est monté sur un axe de pivotement (S) sur l'élément de raccordement (5), le levier d'actionnement (17) ayant une section d' actionneur (18) venant en prise avec une surface inclinée angulairement (19) sur la bague de point de montage (11) et pouvant pivoter avec une section d'actionnement (20) autour de l'axe de pivotement (S), où lors d'un pivotement du levier d'actionnement (17), la section d'actionnement (18) est déplacée de telle manière par rapport à la surface inclinée angulairement (19), que la bague de point de montage (11) est déplacée par rapport à la bague de support (12) autour de l'axe de tuyau (R) à partir de la position de contact vers la position de réglage.

5. Agencement de liaison (1) selon la revendication 4, **caractérisé en ce que** le levier d'actionnement (17) s'engage dans au moins une de ses positions d'extrémité sur un élément de verrouillage (21).

6. Agencement de connexion (1) selon l'une des revendications précédentes, **caractérisé en ce que** l'élément de raccordement (5) comprend un boîtier (22), dans lequel la surface de bride (6) fait partie du boîtier (22), et dans lequel le point de montage (9) du côté de l'élément de raccordement à travers au moins un élément de découplage sonore (23) est monté dans le boîtier (22).

7. Agencement de liaison (1) selon la revendication 6, **caractérisé en ce que** le au moins un élément de découplage sonore (23) est monté dans des supports (24) sur la bague porteuse (12), dans lequel les éléments de découplage sonore (23) entourent au moins partiellement ou entièrement du côté circonférentiel la bague porteuse (12) et /ou dans lequel chacun des éléments de découplage sonore (23) se compose de préférence d'au moins deux parties (24), chaque partie (24) s'étendant essentiellement autour d'une même partie du côté circonférentiel de la bague porteuse (12).

8. Agencement de liaison (1) selon la revendications 6 ou 7, **caractérisé en ce que** plusieurs éléments de découplage sonore (23) sont disposés espacés de manière espacée dans la direction de l'axe du tuyau (R) sur la bague de support (12), l'un des éléments de découplage sonore (23a) repose sur une surface (25a) faisant saillie depuis la bague portante (12) et une surface (26a) faisant saillie depuis le boîtier (22) et un autre des éléments de découplage sonore (23b) repose sur une surface (25b) faisant saillie depuis la bague portante (12) et une surface (26a) faisant saillie depuis le boîtier (22), en particulier sur une bague de retenue (27).

9. Dispositif de connexion (1) selon la revendication 7 ou 8, **caractérisé en ce que** le boîtier (22) comprend au moins deux coques de boîtier (28), lesquelles coques de boîtier (28) peuvent être reliées entre elles par des éléments de verrouillage (29).

10. Agencement de liaison (1) selon la revendication 4 et l'une des revendications 6 à 9, **caractérisé en ce que** le levier d'actionnement (17) est monté sur le boîtier (22) et peut être pivoté par rapport au boîtier (22).

11. Agencement de liaison (1) selon l'une des revendications précédentes, **caractérisé en ce que** l'agencement de liaison (1) comprend un élément coupe-feu (30) opposé à la surface de bride (6), l'élément coupe-feu (30) comprenant une chemise intumescente (31) entourant le tuyau (2), qui est montée dans une cage métallique (32), la cage métallique (32) est maintenue par l'intermédiaire de supports métalliques (33) qui traversent l'agencement de liaison (1) jusqu'à la surface de bride (6) et reposent avec une section de butée (34) sur la surface de bride (6).

12. Agencement de liaison (1) selon l'une des revendications précédentes, **caractérisé en ce qu'**une protection structurelle (36) dans la zone de l'extrémité du tuyau supérieure fermant la section transversale du tuyau et la section transversale ouverte de l'élément de raccordement (5) est prévue, et /ou que dans la zone de la zone de tuyau (37) une protection structurelle (38) est prévue, qui s'étend le long du tuyau (2).

13. Système comprenant un agencement de liaison (1) selon l'une des revendications précédentes et un élément de maintien (39) comprenant un support de fixation (40) pour fixer l'élément de maintien (39) à une paroi (W) et une pièce de montage (41) pour le montage de l'élément de raccordement (5), dans lequel le support de fixation (40) et la pièce de montage (41) sont reliés entre eux par l'intermédiaire d'un guide longitudinal (42).

14. Système selon la revendication 13, **caractérisé en ce que** la pièce de montage (41) entoure essentiellement complètement l'élément de raccordement (5) et est en contact avec la surface de bride (6) et / ou **en ce que** le guide longitudinal (42) comporte des moyens de verrouillage (43), de sorte que la position entre la pièce de montage (41) et le support de fixation (40) peut être verrouillée.
